# EUROPÄISCHE PATENTSCHRIFT

(11) **EP 3 057 845 B1**
(45) Veröffentlichungstag und Bekanntmachung des Hinweises auf die Patenterteilung: **03.03.2021**
(21) Anmeldenummer: 14801928.4
(22) Anmeldetag: 15.10.2014
(51) Int. Cl.: B62B 5/00, B62B 3/06, B65G 67/20, B65D 19/42

(54) **FÖRDEREINHEIT UND FÖRDERSYSTEM ZUM FÖRDERN VON LADUNGSTRÄGERN**
CONVEYOR UNIT AND CONVEYOR SYSTEM FOR CONVEYING LOAD CARRIERS
UNITÉ DE TRANSPORT ET SYSTÈME DE TRANSPORT PERMETTANT DE TRANSPORTER DES SUPPORTS DE CHARGE

(30) Priorität: 15.10.2013 DE 102013017062; 12.08.2014 DE 202014006562 U
(43) Veröffentlichungstag der Anmeldung: 24.08.2016
(73) Patentinhaber: pentanova cs GmbH, 71032 Böblingen (DE)
(72) Erfinder: GAWELCZYK, Klaus, 72766 Reutlingen (DE); BERG, Leif, 71126 Gäufelden (DE)
(74) Vertreter: Ostertag & Partner Patentanwälte mbB
(86) Internationale Anmeldenummer: PCT/EP2014/002779
(87) Internationale Veröffentlichungsnummer: WO 2015/055306

(56) Entgegenhaltungen:
- EP-A1- 0 467 586
- EP-A1- 1 380 818
- EP-A1- 2 100 831
- EP-A2- 0 383 254
- WO-A1-2006/083564
- WO-A2-2009/043474
- DE-A1- 19 909 355
- DE-B- 1 270 254
- GB-A- 2 288 785
- GB-A- 2 440 802
- US-A- 1 865 784
- US-A- 3 213 993

## Beschreibung

Die Erfindung betrifft ein Fördersystem und ein Verfahren zum Fördern von beladenen oder unbeladenen Ladungsträgern nach dem Oberbegriff des Anspruchs 1 bzw. des Anspruchs 16.

Wenn nachfolgend von Ladungsträgern die Rede ist, können dies sowohl beladene Ladungsträger als auch leere Ladungsträger sein.

Ein solches Fördersystem ist beispielsweise aus der DE 10 2007 046 868 A1 bekannt. Dort bilden jeweils zwei Fördereinheiten nach Art einer Förderkufe eine Fördereinrichtung, wobei zwei Förderkufen für das Fördern von Ladungsträgern in Form von Paletten und insbesondere von so genannten Euro-Paletten konzipiert sind. Hierzu können die beiden Förderkufen als Förderkufenpaar eine Palette unterfahren, diese dann anheben und an einen anderen Ort fördern.

Dort sind die Antriebe für ein Verfahren der Fördereinheit und für das Anheben oder Absenken des Tragelements derart gekoppelt, dass das Tragelement und damit der zu fördernde Ladungsträger nur bei stehender Fördereinheit angehoben oder abgesenkt werden kann. Dies schränkt die Mobilität des Systems jedoch stark ein.

Ein ähnliches Fördersystem ist aus der EP 2 100 831 A1 bekannt.

Es ist daher Aufgabe der Erfindung, ein Fördersystem und ein Verfahren der eingangs genannten Art anzugeben, welche diesen Gedanken Rechnung tragen.

Diese Aufgabe wird durch ein Fördersystem gemäß Anspruch 1 und ein Verfahren gemäß Anspruch 16 gelöst.

Erfindungsgemäß sind der Fahrantrieb, durch welchen wenigstens eine Bodenrolle angetrieben und das Fahrwerk in Bewegung versetzt wird, und der Antrieb zum Heben und Senken des Tragelements voneinander entkoppelt und können unabhängig voneinander betrieben werden.

Auf diese Weise kann das Tragelement während der Fahrt der Fördereinheit angehoben oder abgesenkt werden, unabhängig davon, ob die Fördereinheit geradeaus oder eine Kurve fährt.

So können während der Fahrt Bodenunebenheiten quasi in Echtzeit ausgeglichen werden und der Ladungsträger in einer horizontalen Ausrichtung gehalten werden. Bei den bekannten Systemen kann ein solcher Ausgleich lediglich intermittierend erfolgen, d.h. die Fördereinheit muss zunächst stoppen und dann die Ausrichtung des Ladungsträgers an die Bodengegebenheiten anpassen. Dann kann sich das Fördersystem wieder in Bewegung setzen, muss jedoch für jeden weiteren Ausgleichsvorgang wieder angehalten werden.

Mit der erfindungsgemäßen Fördereinheit sind darüber hinaus in gewissen Umfang auch Steigungs- und Gefällefahrten möglich.

Es ist besonders günstig, wenn die Hub-/Senkeinrichtung wenigstens zwei Hub-/Senkeinheiten umfasst, wobei
a) die beiden Hub-/Senkeinheiten mit verschiedenen Bereichen des Tragelements gekoppelt sind;
   oder
b) das Tragelement ein erstes Trageelement ist und ein zweites Tragelement vorhanden ist und jedes Tragelement mit jeweils einer Hub-/Senkeinheit gekoppelt ist.

Bei der ersten Alternative kann das Tragelement gegenüber dem Fahrwerk geneigt werden, indem die beiden Hub-/Senkeinheiten unterschiedlich angesteuert werden. Dieser Neigung folgt dann ein Ladungsträger, der auf dem Tragelement aufliegt.

Bei der zweiten Alternative umfasst die Fördereinheit einen wenigstens zweiteiligen Träger aus zwei Tragelementen, die unabhängig voneinander angehoben oder abgesenkt werden können. Auch auf diese Weise kann der Ladungsträger gegenüber dem Fahrwerk der Fördereinheit geneigt werden.

Es ist dementsprechend vorteilhaft, wenn die erste Hub-/ Senkeinheit unabhängig von der zweiten Hub-/Senkeinheit betreibbar ist.

Bei einer günstigen Ausbildung ist vorgesehen, dass eine Hub-/Senkeinheit der Hub-/Senkeinrichtung
a) eine Rampe umfasst, die das eine Tragelement oder das erste Tragelement und/oder das zweite Tragelement auf seiner dem Fahrwerk zugewandten Seite trägt;
b) einen am Fahrwerk geführten beweglichen Schlitten umfasst, der an der jeweiligen Rampe angreift und mittels eines Schlittenantriebs antreibbar ist.

Dabei ist es von Vorteil, wenn der Schlitten eine Rolle lagert, mit welcher der Schlitten an der Rampe abläuft.

Alternativ kann es günstig sein, wenn eine Hub-/Senkeinheit der Hub-/Senkeinrichtung wenigstens einen Arbeitszylinder mit einem beweglichen Zylinderelement umfasst, welches an der dem Fahrwerk zugewandten Seite des Tragelements angreift. Besonders große Lasten können mit einem solchen System gut angehoben und abgesenkt werden, wobei der Zylinder hydraulisch oder pneumatisch betrieben werden kann.

Insbesondere kann es günstig sein, wenn der Arbeitszylinder ein Teleskopzylinder ist. Im Vergleich zu einem Standardzylinder lassen sich damit bei gleicher Bauhöhe in vertikaler Richtung größere Hübe erreichen.

Bei einer weiteren günstigen Ausbildung ist vorgesehen, dass eine Hub-/Senkeinheit der Hub-/Senkeinrichtung ein Druckkissen umfasst, das sich bei einer Innendruckerhöhung ausdehnt und an der dem Fahrwerk zugewandten Seite des Tragelements angreift. Somit lässt sich eine Hub-/Senkeinheit mit hoher Tragkraft bei sehr geringem Platzbedarf in vertikaler Richtung realisieren.

Ferner kann es vorteilhaft sein, wenn das Druckkissen aus einem elastisch dehnbaren Werkstoff besteht. Dadurch werden Schwingungen und Stoßenergieanteile, die beispielsweise durch das Überfahren von Bodenunebenheiten entstehen, von dem Werkstoff absorbiert, und es lässt sich eine werkstoffabhängige Dämpfungswirkung der Hub-/Senkeinrichtung erzielen.

Weiterhin kann vorgesehen sein, dass die als Druckkissen ausgeführte Hub-/Senkeinheit in Kombination mit einer anderen Hub-/Senkeinheit in Parallelschaltung oder in serieller Schaltung betreibbar ist. Für beide Alternativen ist nur eine Druckmediumversorgung für die zwei Hub-/Senkeinheiten notwendig.

Des Weiteren kann es von Vorteil sein, wenn zwei gleiche in Längsrichtung nebeneinander angeordnete Hub-/Senkeinheiten getrennt ansteuerbar sind. Dadurch kann ein gleichmäßiges Heben und Senken der Last auch dann gewährleistet werden, wenn die Last ungleichmäßig auf die beiden Hub-/Senkeinheiten verteilt und somit der Kraftangriff außermittig ist.

Die Druckkissen können übereinander angeordnet sein, um eine Vergrößerung des maximal erreichbaren Hubes zu erzielen.

Bei einer weiteren günstigen Ausbildung ist vorgesehen, dass eine Hub-/Senkeinheit der Hub-/Senkeinrichtung
a. einen ersten Hebel umfasst, der an dem einen Tragelement oder an dem ersten Tragelement und/oder an dem zweiten Tragelement auf seiner dem Fahrwerk zugewandten Seite angebunden ist;
b. einen zweiten Hebel umfasst, der an dem Fahrwerk auf seiner dem Tragelement zugewandten Seite angebunden ist;
c.eine Schubstange umfasst, die an einem Ende den ersten und den zweiten Hebel miteinander gelenkig verbindet und an einem abgewandten Ende durch einen Aktuator antreibbar ist.

Des Weiteren kann es von Vorteil sein, wenn eine Hub-/Senkeinheit der Hub-/Senkeinrichtung
a.einen Stutzen umfasst, den das eine Tragelement oder das erste Tragelement und/oder das zweite Tragelement auf seiner dem Fahrwerk zugewandten Seite trägt;
b.ein Hebelelement umfasst, das an dem Fahrwerk auf seiner dem Tragelement zugewandten Seite angebunden ist;
c.ein Rollelement umfasst, das an dem Hebelelement angebunden ist und an dem Stutzen abrollt;
d.eine Schubstange umfasst, die an einem Ende gelenkig mit dem Hebelelement verbunden ist und an einem abgewandten Ende durch einen Aktuator antreibbar ist.

Hierbei kann es günstig sein, wenn die Schubstangen der Hub-/Senkeinheiten starr miteinander verbunden sind und über einen gemeinsamen Aktuator antreibbar sind. Damit sind die Hub-/Senkeinheiten nicht mehr unabhängig voneinander betreibbar, allerdings können durch die Kopplung der Gesamtaufbau vereinfacht und Kosten gespart werden.

Alternativ zu den bisherigen Ausführungsbeispielen kann es vorgesehen sein, dass das Fahrwerk einen die Hub-/Senkeinheiten aufnehmenden Antriebsrahmen umfasst und dass das Tragelement einen Oberrahmen umfasst, der Steuerung, Versorgungseinheit und Leitungen trägt. Dadurch dass alle mitgeführten Komponenten an dem Oberrahmen befestigt sind und mit diesem anhebbar sind, lässt sich eine variable Bodenfreiheit erreichen, sodass größere Hindernisse überfahren werden können.

Bei der vorliegenden Erfindung kann es günstig sein, wenn die Hub-/Senkeinheit mit Wegsensoren ausgestattet ist, welche die zurückgelegte Strecke des Tragelements bezüglich des Fahrwerks erfassen. Daraus ist in einem nachfolgenden Schritt die absolute Höhe der Tragelementoberfläche über dem Boden ableitbar. In einem automatisierten bedienerfreien Betrieb kann diese als Regelungsgröße verwendet werden, um sicherzustellen, dass beispielsweise die Last auf eine vorgegebene Höhe angehoben wurde. Besonders bei zeitkritischen Anwendungen können durch diese Regelung unnötige Verfahrbewegungen eliminiert werden.

Bei einer weiteren vorteilhaften Ausführung verfügt die Fördereinheit über eine eingebaute Druckmesseinrichtung, die dazu eingerichtet ist, das Gewicht einer zu transportierenden Last vorzugsweise während des Hubvorgangs zu messen. Dadurch kann beispielsweise die mit einem räumlich und zeitlich getrennten Wiegevorgang verbundene Transport- und Messzeit erspart werden.

Als Druckmesseinrichtung kann eine Druckdose verwendet werden. Diese ist beispielsweise zwischen Hub-/Senkeinheit und Fahrwerk oder zwischen Tragelement und Hub-/Senkeinheit angeordnet.

Alternativ kann es von Vorteil sein, wenn das Gewicht einer zu transportierenden Last aus Wegsensordaten und aus Druckmessdaten in der Hub-/Senkeinheit bestimmbar ist. Zu diesem Zweck ist ein Drucksensor zur Messung des Drucks in dem Druckkissen bzw. in dem Arbeitszylinder vorgesehen.

Des Weiteren kann vorgesehen sein, dass das Antriebssystem in Abhängigkeit von dem gemessenen Gewichts steuerbar ist. Hierbei können Drehmoment und/oder Drehzahl an den Bodenrollen beispielsweise abhängig von den Messwerten vorgegeben werden. Um zudem eine bessere Traktion der Bodenrollen zu erreichen, kann es vorteilhaft sein, wenn die Bodenrollen unabhängig voneinander angetrieben werden. Bei einer erkannten ungleichen Lastverteilung kann beispielsweise das zum Antrieb benötigte Drehmoment und die Drehzahl für jede Bodenrolle einzeln vorgegeben werden.

Nachfolgend werden Ausführungsbeispiele der Erfindung anhand der Zeichnungen näher erläutert. In diesen zeigen:
- Figur 1: eine perspektivische Ansicht eines Fördersystems zum Fördern von Ladungsträgern, bei welchem zwei unabhängig voneinander verfahrbare, kufenartige Fördereinheiten eine Fördereinrichtung bilden, wobei die Fördereinheiten eine Leerkonfiguration einnehmen;
- Figur 2: eine der Figur 1 entsprechende perspektivische Ansicht des Fördersystems, wobei die Fördereinheiten jeweils eine gleiche Förderkonfiguration einnehmen;
- Figur 3: eine der Figur 1 entsprechende perspektivische Ansicht des Fördersystems, wobei außerdem ein Ladungsträger in Form einer Palette gezeigt ist;
- Figur 4: eine der Figur 2 entsprechende perspektivische Ansicht des Fördersystems, wobei ebenfalls ein Ladungsträger in Form einer Palette gezeigt ist;
- Figur 5: eine Vorderansicht des Fördersystems mit den Fördereinheiten in gleicher Förderkonfiguration mit Ladungsträger;
- Figur 6: eine perspektivische Ansicht des Fördersystems mit Ladungsträger, bei dem die Fördereinheiten verschiedene Förderkonfigurationen haben, so dass das Fördersystem eine Seitenneigungs-Förderkonfiguration bietet;
- Figur 7: eine Vorderansicht des Fördersystems mit den Fördereinheiten in der Seitenneigungs-Förderkonfiguration von Figur 6;
- Figur 8: eine Seitenansicht einer Fördereinheit in einer Leerkonfiguration in teilweiser Durchsicht, so dass ein Fahrwerk, ein Antriebssystem und eine Hub-/ Senkeinrichtung für ein Tragelement zu erkennen sind;
- Figur 9: eine der Figur 8 entsprechende Seitenansicht einer Fördereinheit in einer Förderkonfiguration in teilweiser Durchsicht;
- Figur 10: eine den Figuren 8 und 9 entsprechende Seitenansicht einer Fördereinheit in einer LängsneigungsFörderkonfiguration;
- Figur 11: eine Ansicht von oben in teilweiser Durchsicht auf die Fördereinrichtung;
- Figur 12: eine den Figuren 8 bis 10 entsprechende Seitenansicht einer Fördereinheit in teilweiser Durchsicht mit einer abgewandelten Hub-/Senkeinrichtung;
- Figur 13: eine Ansicht von oben in teilweise Durchsicht auf die Fördereinheit von Figur 12;
- Figur 14: eine Steuerlayout der Fördereinheit nach den Figuren 12 und 13;
- Figur 15: eine Seitenansicht einer Fördereinheit in einer Leerkonfiguration in teilweiser Durchsicht mit einer abgewandelten Hub-/Senkeinrichtung mit zwei quer zur Längsrichtung der Fördereinheit angeordneten getrennt betreibbaren Druckkissen;
- Figur 16: eine der Figur 15 entsprechende Seitenansicht einer Fördereinheit in einer Förderkonfiguration in teilweiser Durchsicht;
- Figur 17: eine Seitenansicht einer Fördereinheit in einer Leerkonfiguration in teilweiser Durchsicht mit einer abgewandelten Hub-/Senkeinrichtung mit mindestens einem in Längsrichtung der Fördereinheit angeordneten Druckkissen;
- Figur 18: eine der Figur 17 entsprechende Seitenansicht einer Fördereinheit in einer Förderkonfiguration in teilweiser Durchsicht;
- Figur 19: eine Ansicht von oben in teilweiser Durchsicht auf die Fördereinheit von Figur 15;
- Figur 20: eine Ansicht von oben in teilweiser Durchsicht auf die Fördereinheit von Figur 17;
- Figur 21: eine Ansicht von oben in teilweiser Durchsicht auf eine abgewandelte Fördereinheit mit zwei in Längsrichtung angeordneten Druckkissen in Parallelschaltung;
- Figur 22: eine Vorderansicht des Fördersystems mit Ladungsträger mit zwei abgewandelten Fördereinheiten in Förderkonfiguration mit jeweils zwei in Längsrichtung angeordneten Druckkissen in Serienschaltung
- Figur 23: eine Steuerlayout der Fördereinheit nach den Figuren 15 und 19.
- Figur 24: eine Seitenansicht einer Fördereinheit in teilweiser Durchsicht mit einer abgewandelten Hub/Senkeinrichtung mit Teleskopzylinder als Arbeitszylinder;
- Figur 25: eine Seitenansicht einer Fördereinheit in teilweiser Durchsicht mit einer abgewandelten Hub/Senkeinrichtung mit Teleskopzylinder als Arbeitszylinder und einem Oberrahmen;
- Figur 26: eine der Figur 12 entsprechende Seitenansicht einer Fördereinheit mit einer Druckmesseinrichtung;
- Figur 27: eine Seitenansicht einer Fördereinheit in einer Leerkonfiguration in teilweiser Durchsicht mit einer abgewandelten Hub-/Senkeinrichtung mit einer Hebelvorrichtung;
- Figur 28: eine der Figur 27 entsprechende Seitenansicht einer Fördereinheit in einer Förderkonfiguration;
- Figur 29: eine Seitenansicht einer Fördereinheit in einer Leerkonfiguration in teilweiser Durchsicht mit einer abgewandelten Hub-/Senkeinrichtung mit einer Rollelement-Hebelvorrichtung;
- Figur 30: eine der Figur 29 entsprechende Seitenansicht einer Fördereinheit in einer Förderkonfiguration;
- Figur 31: eine Seitenansicht einer Fördereinheit in einer Leerkonfiguration in teilweiser Durchsicht mit einer abgewandelten Hub-/Senkeinrichtung mit unabhängigen Hebelvorrichtungen;
- Figur 32: eine der Figur 31 entsprechende Seitenansicht einer Fördereinheit in einer Förderkonfiguration;
- Figur 33: eine Seitenansicht einer Fördereinheit in einer Leerkonfiguration in teilweiser Durchsicht mit einer abgewandelten Hub-/Senkeinrichtung mit unabhängigen Hebelvorrichtungen;
- Figur 34: eine der Figur 31 entsprechende Seitenansicht einer Fördereinheit in einer Förderkonfiguration.

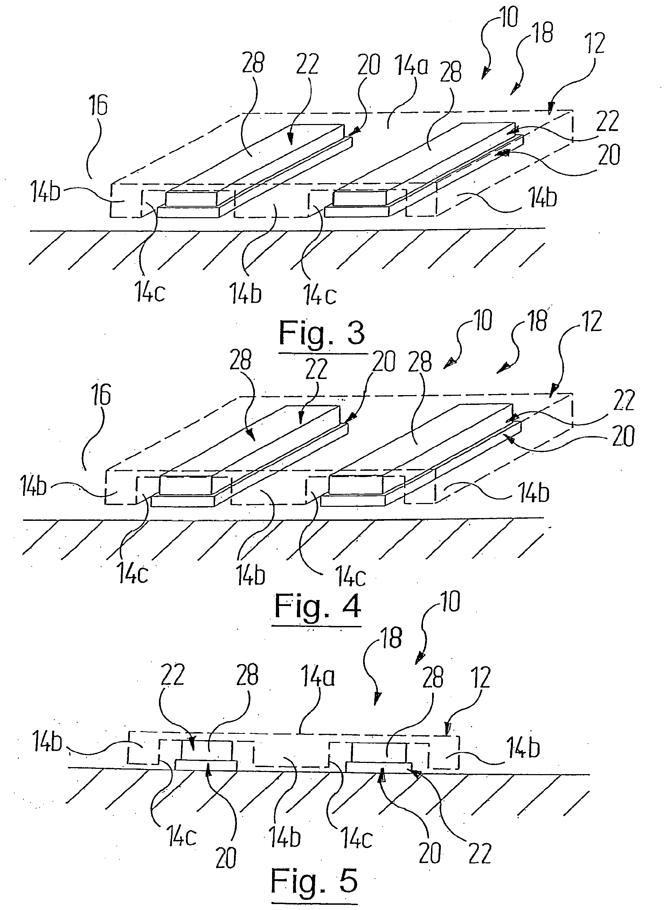

In den Figuren ist mit 10 insgesamt ein Fördersystem bezeichnet, mittels welchem beladene oder unbeladene Ladungsträger 12 gefördert werden können. Als Beispiel für Ladungsträger 12 sind in den Figuren 3 bis 6 Paletten gezeigt, wie sie an und für sich bekannt sind.

Ein Ladungsträger 12 hat eine Tragfläche 14a, auf welcher nicht eigens gezeigtes Fördergut abgestellt und befestigt werden kann. Die Tragfläche 14a ruht über Auflageelemente 14b auf einem Boden 16. Zwischen zwei benachbarten Auflageelementen 14b verbleibt jeweils ein lichter Durchgang 14c, der nach unten zum Boden 16 hin und an beiden Stirnenden offen ist. Insbesondere kann ein solcher Ladungsträger 12 als so genannte Euro-Palette ausgebildet sein.

Das Fördersystem 10 umfasst eine Vielzahl von Fördereinrichtungen 18, die auf dem Boden 16 verfahren werden können. Eine Fördereinrichtung 18 ist ihrerseits aus zwei Fördereinheiten 20 gebildet. Die Fördereinheiten 20 sind beim vorliegenden Ausführungsbeispiel als Förderkufen 22 ausgebildet. Diese können zum Beispiel eine Außenkontur haben, die etwa derjenigen einer Gabelzinke eines Gabelstaplers entspricht.

Diese Fördereinheiten 20 kommunizieren in an und für sich bekannter Weise mit einer nicht eigens gezeigten Zentralsteuerung, welche den Förderprozess koordiniert.

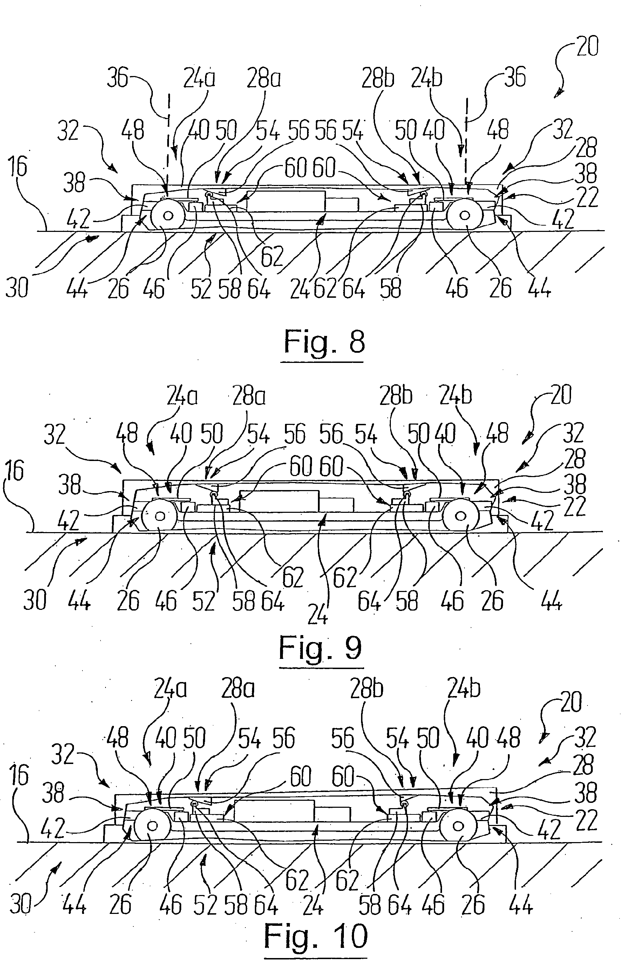

In den Figuren 8 bis 10 ist nun eine der Fördereinheiten 20 der Fördereinrichtung 18 separat gezeigt. Die Fördereinheit 20 umfasst ein Fahrwerk 24, welches auf Bodenrollen 26 verfahren werden kann und zwei Endbereiche 24a, 24b definiert.

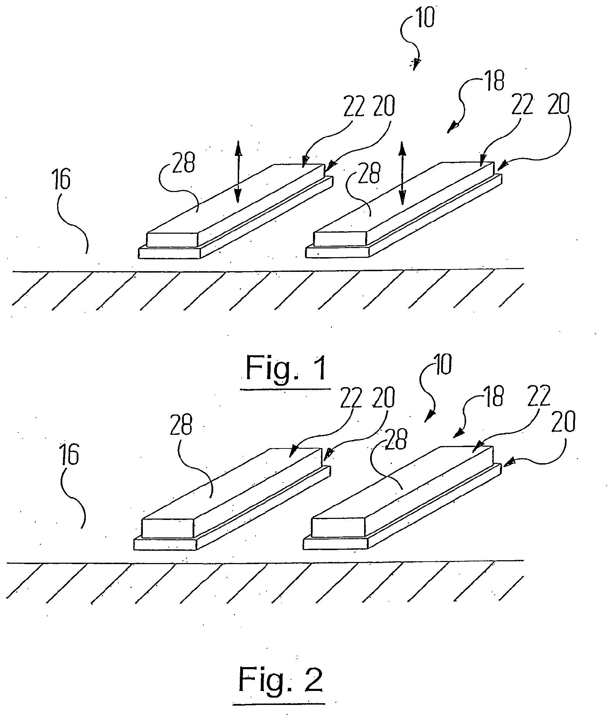

Das Fahrwerk 24 führt außerdem ein Tragelement 28 mit sich, welches bezogen auf das Fahrwerk 24 angehoben oder abgesenkt werden kann; dies ist lediglich in Figur 1 durch Doppelpfeile veranschaulicht. Wenn das Tragelement 28 eine abgesenkte Stellung einnimmt, befindet sich die Fördereinheit 20 in einer Leerkonfiguration, in welcher sie den Ladungsträger 12 unterfahren kann. In dieser Leerkonfiguration kann die Fördereinheit 20 auch durch den lichten Durchgang 14c des Ladungsträgers 12 hindurchfahren, d.h. dass die Fördereinheit 20 auf einer Seite unter den Ladungsträger 20 einfahren, unter diesem hindurch und auf der anderen Seite wieder aus dem Ladungsträger 20 herausfahren kann. Hierzu ist die Fördereinheit 20 in ihrer Außenkontur auf zu fördernde Ladungsträger 12 abgestimmt. Im Falle einer Palette bedeutet dies, dass die Fördereinheit 20 in ihrer Leerkonfiguration solche Abmessungen hat, dass sie in einen von deren lichten Durchgängen 14c einfahren kann, so dass sich die Fördereinheit 20 in diesem Durchgang 14c unter der Tragfläche 14a der Palette befindet.

Umgekehrt müssen auch die Ladungsträger 12 an die Fördereinheiten 20 angepasst sein und wenigstens zwei solche lichten Durchgänge 14c bereitstellen.

Dann wird das Tragelement 28 einer Fördereinheit 20 bezogen auf das Fahrwerk 24 angehoben. Wenn das Tragelement 28 eine angehobene Stellung einnimmt, befindet sich die Fördereinheit 20 in einer Förderkonfiguration, in der sie einen Ladungsträger 12 mit ihrem Tragelement 28 aufnehmen und fördern kann.

Bei einer Fördereinrichtung 18 aus zwei Fördereinheiten 20 fahren die beiden Fördereinheiten 20 koordiniert nebeneinander in die benachbarten Durchgänge 14c des Ladungsträgers 12 ein, wie es aus Figur 3 ersichtlich ist. Dann werden die Tragelemente 28 der beiden Fördereinheiten 20 synchronisiert angehoben, so dass der Ladungsträger 12 als Ganzes und gegebenenfalls mit dem darauf platzierten Fördergut angehoben wird. Dann kann der Ladungsträger 12 mit Hilfe der Fördereinrichtung 18 an einen anderen Ort gefördert werden.

Die Figuren 2 sowie 4 und 5 zeigen die Fördereinrichtung 18 mit den beiden Fördereinheiten 20 in derselben Standard-Förderkonfiguration, so dass die Tragstruktur 12 bei einem horizontalen Boden 16 in horizontaler Ausrichtung vom Boden 16 angehoben ist.

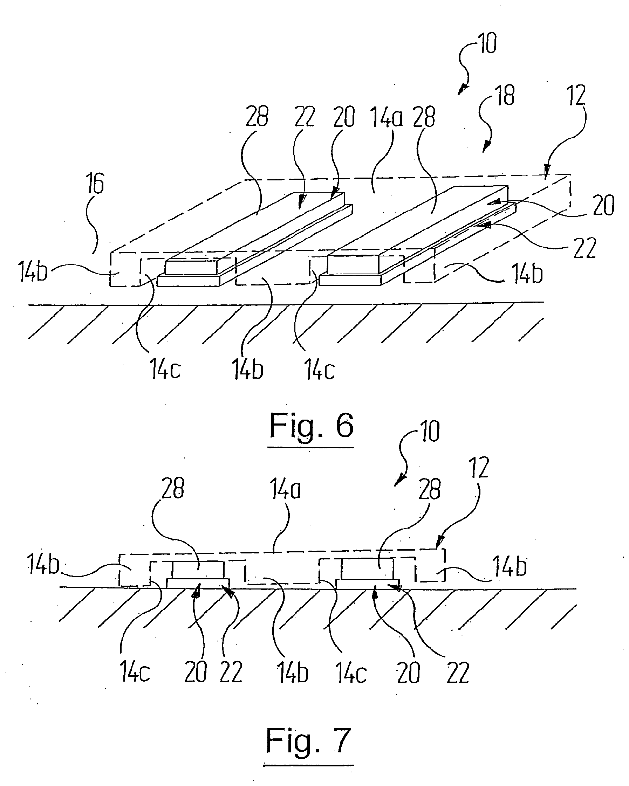

Wenn der Boden 16 quer zur Fahrtrichtung der Fördereinheiten 20 geneigt verläuft, kann der Ladungsträger 12 dennoch horizontal ausgerichtet gefördert werden, indem die Tragelemente 28 der Fördereinheiten 20 unterschiedlich weit angehoben werden. Dies veranschaulichen die Figuren 6 und 7, welche die Fördereinrichtung 18 in einer Seitenneigungs-Konfiguration zeigen.

Die Abstimmung und gegebenenfalls Synchronisierung der Steuervorgänge bei den Fördereinheiten 20 und von deren Bewegungen kann über die angesprochene Zentralsteuerung und alternativ oder ergänzend mit Hilfe von ebenfalls nicht eigens gezeigten On-Board-Steuerungen der Fördereinheiten 20 koordiniert werden.

Wie in den Figuren 8 bis 11 zu erkennen ist, umfasst jede Fördereinheit 20 ein Antriebssystem 30, mittels welchem die Bodenrollen 26 und das Tragelement 28 antreibbar sind.

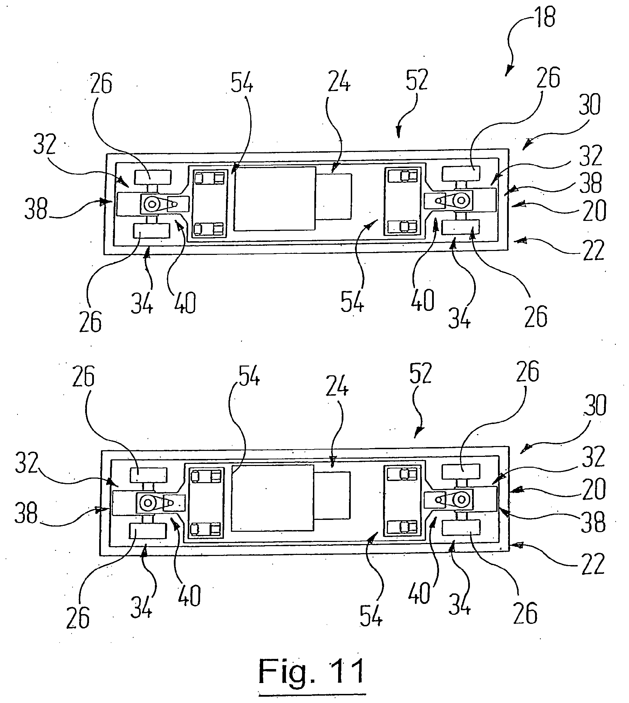

Für das Fahrwerk 24 umfasst das Antriebssystem 30 einen Fahrantrieb 32, der die Bodenrollen 26 antreibt, welche jeweils als Rollenpaar 34 (vgl. Figur 11) um eine Lenk-Drehachse 36 verdrehbar gelagert sind. Die Lenk-Drehachsen 36 sind nur in Figur 8 gezeigt und verlaufen vertikal, wenn die Fördereinheit 20 mit den Bodenrollen 26 auf einem horizontal ebenen Boden 16 aufliegt.

Der Fahrantrieb 32 umfasst Antriebseinheiten 38 und Lenkeinheiten 40 an den gegenüberliegenden Endbereichen 24a, 24b des Fahrwerks 24. Die Antriebseinheiten 38 umfassen Antriebs-Elektromotoren 42, welche über Getriebemittel 44 jeweils mit den zugehörigen antreibbaren Bodenrollen 26 bzw. deren Lagerachse getrieblich verbunden sind. Bei einer nicht eigens gezeigten Abwandlung können die Bodenrollen 26 auch ohne zwischengeschaltete Getriebemittel 44 angetrieben sein.

Die Lenkeinheiten 40 umfassen jeweils einen Lenk-Elektromotor 46, der über Getriebemittel 48, beispielhaft ist ein Riemenzug 50 veranschaulicht, die Lage der Bodenrollen 26 bezogen auf ihre Lenk-Drehachse 36 einstellen kann.

Die Fördereinheiten 20 werden nun verfahren, indem die Antriebs-Elektromotoren 42 und die Lenk-Elektromotoren 46 aufeinander abgestimmt bestromt werden.

Wenn alle vier Bodenrollen 26 einer Fördereinheit 20 quer zur Längsrichtung der Fördereinheit 20 ausgerichtet sind und alle Antriebs-Elektromotoren 36a gleich angesteuert werden, nimmt die Fördereinheit 20 eine Linearfahrt-Konfiguration ein und fährt geradeaus; dies veranschaulichen exemplarisch die beiden in Figur 11 gezeigten Fördereinheiten 20 der dortigen Fördereinrichtung 18.

Für Kurvenfahrten muss die Ausrichtung der Achsen der Bodenrollen 26 bezogen auf die Längsrichtung der Fördereinheiten 20 geändert werden. Dazu können die Bodenrollen 26 jeweils als Rollenpaar durch die Lenk-Elektromotoren 46 um die Drehachse 36 verdreht werden.

Bei einer Abwandlung sind keine eigenen Lenkeinheiten 40 vorhanden. Dann kann jede Bodenrolle 26 individuell von einem eigenen Antriebs-Elektromotor 42 angetrieben werden. In diesem Fall können die beiden Bodenrollen 26 eines Rollenpaares 34 gegensinnig oder mit unterschiedlicher Drehzahl angetrieben werden, wodurch sich die Bodenrollen 26 als Rollenpaar 34 um die Lenk-Drehachse 36 verdrehen. So kann die Fördereinheit eine Kurvenfahrt-Konfiguration einnehmen und eine Kreiskurve fahren, wenn die Rollenpaare 34 so ausgerichtet sind, dass die Achsen der Bodenrollen 26 senkrecht auf der zu fahrenden Kreiskurve stehen. Bei einer Fördereinrichtung 18 mit zwei Fördereinheiten 20 kann eine Palette 14 dann beispielsweise auch auf der Stelle verdreht werden, wenn alle vier Rollenpaare 34 der beiden Fördereinheiten 20 in dieser Weise auf ein und denselben Kreis ausgerichtet sind.

Während Kurvenfahrten kann die Steuerung auch die unterschiedlichen Laufwege der bezogen auf die Kurve radial außen liegenden Bodenrollen 26 gegenüber den radial innen liegenden Bodenrollen 26 berücksichtigen. Durch Ändern der Drehzahlen der verschiedenen Bodenrollen 26 können die Richtung und der Radius der Kurven auch während der Fahrt angepasst werden, so dass unterschiedlichste Fahrwege vorgebbar sind.

Wenn, wie veranschaulicht, Lenkeinheiten 40 vorhanden sind, können die unterschiedlichen Laufwege durch die angesprochenen Getriebemittel 44 der Antriebseinheiten 38 ausgeglichen werden.

Eine Art Parallelverschiebung eines Ladungsträgers 12 kann beispielsweise erfolgen, wenn die Rollenpaare 34 von beiden Fördereinheiten 20 einer Fördereinrichtung 18 zunächst in die gleiche Drehrichtung und um den gleichen Drehwinkel um die Drehachse 36 verdreht werden und die Bodenrollen 26 dann alle synchron und gleich angetrieben werden.

Für das Anheben und Absenken des Tragelements 28 umfasst das Antriebssystem 20 eine Hub-/Senkeinrichtung 52. Diese Hub-/Senkeinrichtung 52 arbeitet unabhängig von dem Fahrantrieb 32.

Dadurch ist das Antriebssystem 20 derart eingerichtet, dass das Tragelement eine Bewegung durchführen kann, die durch eine Überlagerung einer horizontalen Bewegungskomponente des Fahrwerks 24 und einer vertikalen Bewegungskomponente des Tragelements 28 bewirkt wird. Dies bedeutet, dass die Fördereinrichtung 18 den Ladungsträger 12 mit oder ohne Ladung während der Fahrt anheben oder absenken kann. Die Fördereinheiten 20 der Fördereinrichtung 18 müssen hierfür nicht stillstehen, können dies jedoch bei Bedarf.

Die Hub-/Senkeinrichtung 52 umfasst zwei Hub-/Senkeinheiten 54, von denen beim vorliegenden Ausführungsbeispiel an den beiden Endbereichen 24a, 24b des Fahrwerks 24 jeweils eine angeordnet ist. Die beiden Hub-/Senkeinheiten 54 sind jeweils mit unterschiedlichen Bereichen 28a, 28b des Tragelements 28 gekoppelt. An den Koppelstellen können die Hub-/Senkeinheiten 54 jeweils ein Anheben oder Absenken des Tragelements 28 bewirken.

Dabei können die beiden Hub-/Senkeinheiten 54 einer Fahreinheit 20 unabhängig voneinander betrieben werden. In Figur 8 ist die Fördereinheit 20 in ihrer Leerkonfiguration gezeigt.

Zum einen können die Tragelemente 28 im Vergleich zu der Leerkonfiguration gleichmäßig gegenüber dem Fahrwerk 24 angehoben werden und eine entsprechende Förderkonfiguration einnehmen, wie es in Figur 9 gezeigt ist.

Zum anderen kann das Tragelement 28 in Längsrichtung der Fördereinheit 20 jedoch auch in eine geneigte Längsneigungs-Förderkonfiguration gebracht werden, wie es in Figur 10 veranschaulicht ist. Dort ist das Tragelement 28 am Endbereich 24a des Fahrwerks 24 diesem gegenüber weiter angehoben als am gegenüberliegenden Endbereich 24b.

Auf diese Weise können also nicht nur Neigungen des Bodens 16 quer zur Fahrtrichtung durch zwei zusammenarbeitende Fördereinheiten 20 einer Fördereinrichtung 18, sondern auch längs zur Fahrtrichtung der Fördereinrichtung 18 durch jeweils eine der Fördereinheiten 20 ausgeglichen werden.

Durch die Möglichkeit der oben erläuterten Seitenneigungs- und Längsneigungs-Förderkonfigurationen, die auch kombiniert werden können, können allgemein Bodenunebenheiten durch die Fördereinrichtung 18 ausgeglichen werden, so dass der Ladungsträger 12 stets weitgehend eine horizontale Ausrichtung beibehalten kann. Es ist außerdem möglich, dass die Fördereinrichtung 18 bis zu einem gewissen Neigungsgrad Steigungen und Gefälle überwinden kann, wobei der Ladungsträger 12 seine horizontale Ausrichtung beibehält.

Bei einer nicht eigens gezeigten Abwandlung umfasst eine Fördereinheit 20 z.B. auch zwei Tragelemente, wobei jedes Tragelement mit jeweils einer Hub-/Senkeinheit 54 gekoppelt ist, so dass die beiden Tragelemente unabhängig voneinander angehoben oder abgesenkt werden können.

Bei dem vorliegend gezeigten Ausführungsbeispiel mit dem einzigen Tragelement 28 umfasst jede Hub-/Senkeinheit 54 zwei Rampen 56, die das Tragelement 28 auf seiner dem Fahrwerk 24 zugewandten Seite trägt. Bei der Variante mit zwei Tragelementen pro Fördereinheit 20 umfasst das erste Tragelement und/oder das zweite Tragelement die Rampen 56 auf seiner dem Fahrwerk 24 zugewandten Seite.

Außerdem umfasst jede Hub-/Senkeinheit 54 am Fahrwerk 24 geführte bewegliche Schlitten 58, die an der jeweiligen Rampe 56 angreifen und mittels eines Schlittenantriebs 60 angetrieben wird. Der Schlittenantrieb 60 ist wieder durch einen Elektromotor 62 gebildet.

Der Schlitten 58 lagert für eine reibungsarme Kraftübertragung eine Rolle 64, mit welcher der Schlitten 58 an der Rampe 56 abläuft.

Wenn nun der jeweilige Schlitten 58 einer bestimmten Hub-/ Senkeinheit 54 der Hub-/Senkeinrichtung 52 in Richtung des näher am Fahrwerk 24 liegenden Bereichs der Rampe 56 bewegt wird, wird hierüber das mit dieser Rampe 56 verbundene Tragelement 28 gegenüber dem Fahrwerk 24 angehoben. Bei einer Bewegung des Schlittens 58 in die entgegengesetzte Richtung wird das Tragelement 28 entsprechend gegenüber dem Fahrwerk 24 abgesenkt.

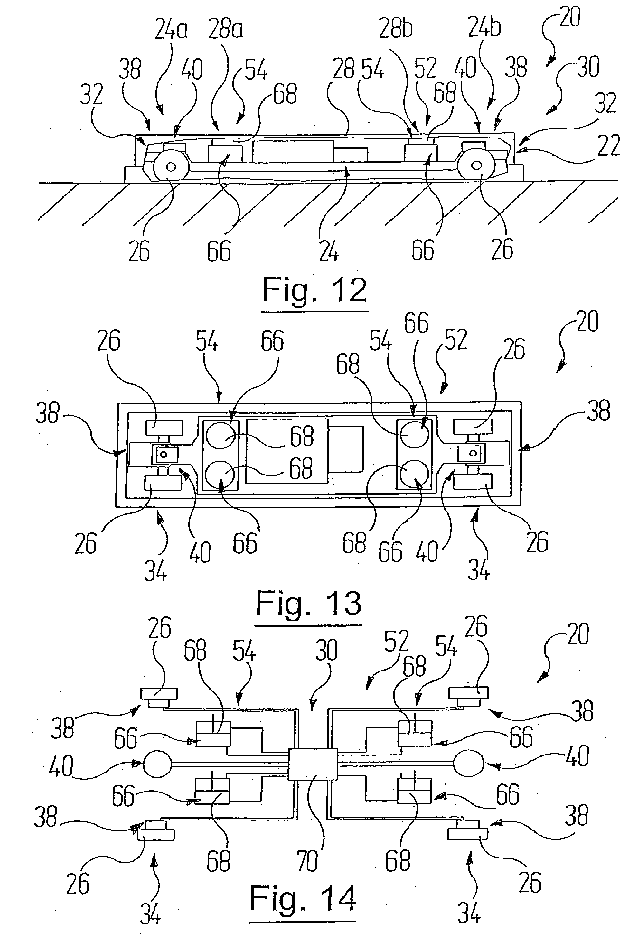

Die Figuren 12 bis 14 veranschaulichen ein abgewandeltes Ausführungsbeispiel, bei welchem jede Hub-/Senkeinheit 54 statt der Rampe 56 und dem Schlitten 58 jeweils zumindest einen Arbeitszylinder 66 umfasst, der mit einem beweglichen Zylinderelement 68 an der dem Fahrwerk 24 zugewandten Seite des Tragelements 28 angreift.

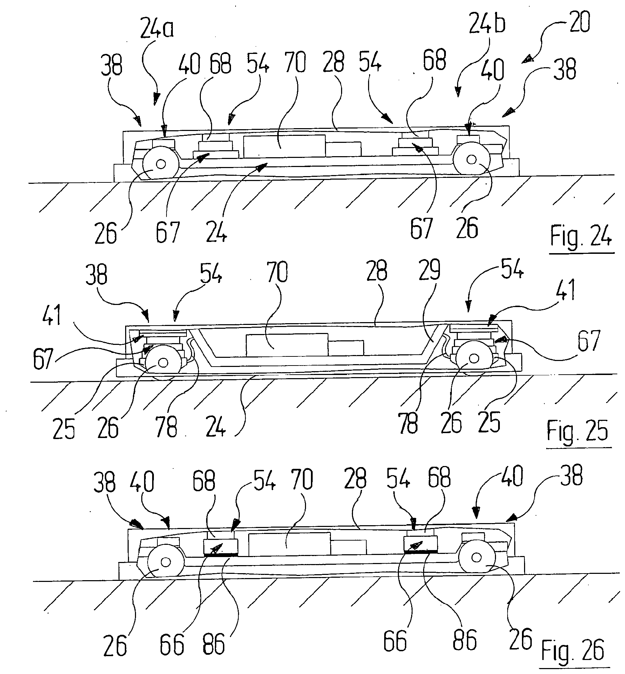

Der Arbeitszylinder kann hierbei als ein Teleskopzylinder 67 ausgeführt sein, wie in Figur 24 veranschaulicht ist. Der Teleskopzylinder 67 ermöglicht besonders große Hübe bei niedriger Bauhöhe in der Leerkonfiguration der Fördereinheit 20.

Wie in Figur 13 zu erkennen ist, kann eine Hub-/Senkeinheit 54 auch jeweils zwei Arbeitszylinder 66 umfassen, die quer zur Längsrichtung der Fördereinheit 20 nebeneinander am Fahrwerk 24 angebracht sind.

Dieser Aufbau ist in Figur 14 nochmals in einer Layout-Ansicht veranschaulicht, in der die symbolisch gezeigten Komponenten mit denselben Bezugszeichen versehen sind. Dort ist mit 70 eine On-Board-Steuerung bezeichnet, welche die einzelnen Antriebseinheiten ansteuert.

In Figur 14 ist ein Ausführungsbeispiel gezeigt, bei welchem jede Bodenrolle 26 mit Hilfe einer eigenen Antriebseinheit 38 individuell angetrieben werden kann.

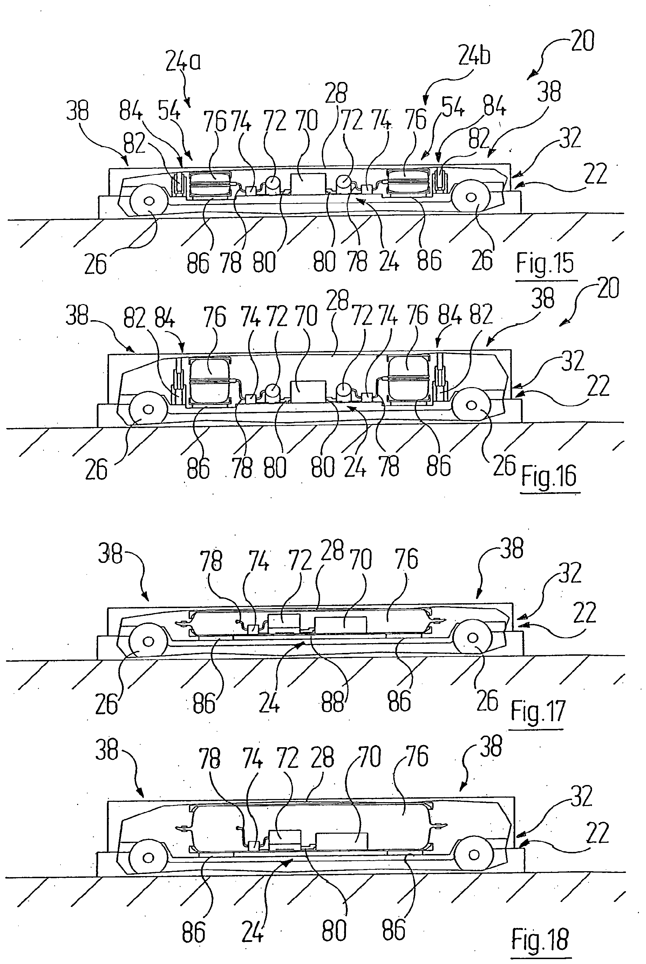

Die Figuren 15 bis 23 veranschaulichen ein weiteres abgewandeltes Ausführungsbeispiel, bei dem eine vorhandene Hub-/Senkeinheit 54 statt des zumindest einen Arbeitszylinders 66 zumindest ein Druckkissen 76 umfasst, das an der dem Fahrwerk 24 zugewandten Seite des Tragelements 28 angreift.

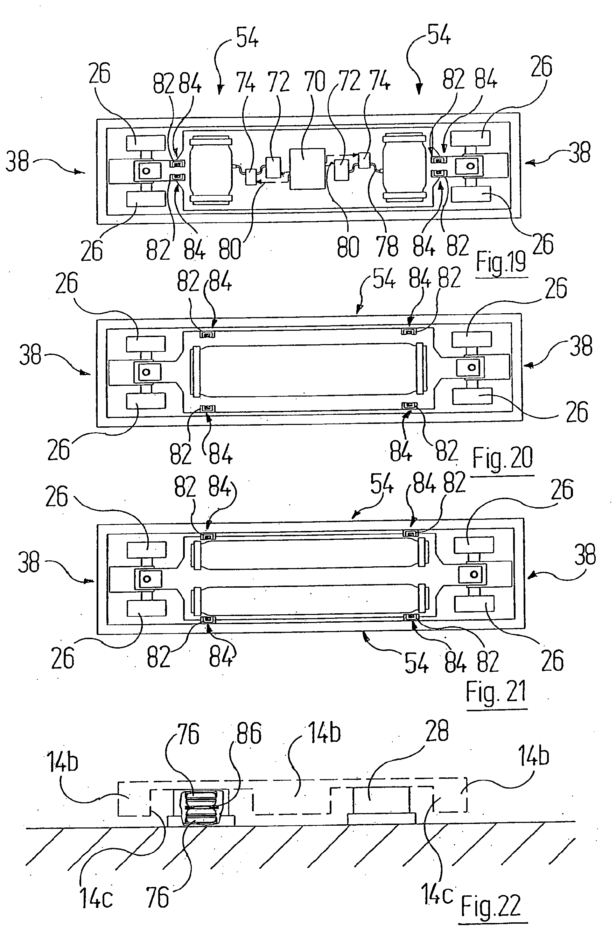

Wie in Figur 15 zu erkennen ist, kann die Fördereinheit 20 zwei Hub-/Senkeinheiten 54 mit jeweils einem Druckkissen 76 umfassen, das quer zur Längsrichtung der Fördereinheit 20 an jeweils einem der Endbereiche 24a und 24b des Fahrwerks 24 angebracht ist. Dargestellt sind pneumatisch betriebene Druckkissen 76, die über jeweils eine Pumpe 72 und ein Ventil 74 mit Druckluft versorgt werden, wobei die Druckluft über die Leitungen 78 in das jeweilige Druckkissen 76 gelangt. In Figur 19 ist die Fördereinheit 20 von oben in teilweiser Durchsicht zu sehen.

Die Ansteuerung der Pumpe 72 und des Ventils 74 kann für das jeweilige Druckkissen 76 unabhängig und getrennt über ein entsprechendes Steuersignal 80 der Steuerung 70 erfolgen. Somit kann die Fördereinheit 20 aus einer Leerkonfiguration, wie in Figur 15 gezeigt, in eine Förderkonfiguration, wie in Figur 16 gezeigt, überführt werden. Bei der Ansteuerung einer Auslassstellung des Ventils 74 kann wieder die Leerkonfiguration herbeigeführt werden.

Das Tragelement 28 ist über Linearführungen 82 in einer vertikalen Bahn relativ zum Fahrwerk 24 verfahrbar. Dadurch wird ein Verkanten der Elemente verhindert. Die Linearführungen 82 sind als Teleskopschienen ausgeführt und beinhalten Endanschläge, welche die Endpositionen des Tragelements 28 vorgeben.

Ferner beinhalten die Teleskopschienen integrierte Wegsensoren 84 zur Erfassung des vom Tragelement 28 bezüglich des Fahrwerks 24 zurückgelegten Wegs und damit der absoluten Höhe des Tragelements 28 über dem Boden. Als Wegsensor kann beispielsweise ein Inkrementalgeber in der Form eines Magnetband-Positionssensors zum Einsatz kommen.

Weiterhin sind Druckmesseinrichtungen 86 vorgesehen, die zur Gewichtskraftmessung eingesetzt werden können. Als Druckmesseinrichtung 86 kann ein Piezo-Kraftmesselement, das in einer Druckdose verbaut ist, verwendet werden. Somit lässt sich das Gewicht einer zu transportierenden Ladung ohne zusätzliche externe Messeinrichtungen während des Hubvorgangs ermitteln. Die Druckdose ist in den Figuren 15 bis 18 in Aussparungen im Fahrwerk eingebaut, die an die Abmessungen der Druckdose angepasst sind.

Die Druckdose kann auch zwischen Tragelement 28 und Drucckissen 76 angeordnet sein. Selbstverständlich lässt sich die Druckmesseinrichtung 86 auch in den Ausführungsbeispielen gemäß den Figuren 1 bis 14 einsetzen. Figur 26 veranschaulicht beispielsweise die Druckmesseinrichtung 86 in Verbindung mit einem Arbeitszylinder 66.

Die von der Druckmesseinrichtung 86 ermittelten Daten werden an die Steuerung 70 weitergegeben und dort verarbeitet. Die Steuerung 70 sendet in Abhängigkeit von dem ermittelten Gewicht und dessen Verteilung Steuersignale an den Fahrantrieb 32. Für den Fall, dass jede Bodenrolle 26 einzeln angetrieben wird, kann die Antriebskraft optimal verteilt werden. Dadurch, dass jeder Bodenrolle 26 ein Drehmoment und eine Drehzahl zugewiesen werden, wird die Fahrstabilität der Fördereinheit 20 verbessert.

Die Figuren 17 und 18 veranschaulichen eine Alternativausführung in der Leer- bzw. in der Förderkonfiguration, bei der die Hub-/Senkeinheit 54 mindestens ein parallel zur Längsrichtung angeordnetes und sich im Wesentlichen über die Länge des Fahrwerks 24 erstreckendes Druckkissen 76 umfasst. Wie in Figur 20 gezeigt, kann die Hub-/Senkeinheit 54 ein solches Druckkissen 76 umfassen, das mittig auf dem Fahrwerk 24 angeordnet ist.

Alternativ kann die Hub-/Senkeinheit 54 zwei gleiche auf dem Fahrwerk 24 in Längsrichtung nebeneinander angeordnete Druckkissen 76 umfassen, wie in Figur 21 gezeigt ist. Die zwei Druckkissen 76 sind über eine gemeinsame Druckluftversorgung betreibbar, wobei eine Parallelschaltung realisiert wird. Durch getrennte Steuerung der beiden Druckkissen 76 kann ein gleichzeitig erfolgender gleicher Hub, d.h. ein Gleichlauf der zwei Druckkissen, auch dann erreicht werden, wenn die zu tragende Last ungleichmäßig auf die Druckkissen verteilt ist. Bei einem solchen außermittigen Kraftangriff wird somit einem Verkanten entgegengewirkt und eine gleichmäßige Verfahrbewegung sichergestellt. Die getrennte Steuerung kann beispielsweise durch zusätzliche Steuerventile und Drosselrückschlagventile realisiert werden.

In Figur 22 ist eine Fördereinheit von vorne in teilweiser Durchsicht dargestellt, die zwei übereinander platzierte Druckkissen 76 umfasst. Hierbei ist eines der Druckkissen 76 mit dem Fahrwerk 24 und das andere Druckkissen 76 mit dem Tragelement 28 gekoppelt. Eine Druckmesseinrichtung 86 ist zwischen den zwei Druckkissen 76 eingebaut. Durch die gezeigte Anordnung der Druckkissen 76 lassen sich verhältnismäßig große Hubbewegungen realisieren.

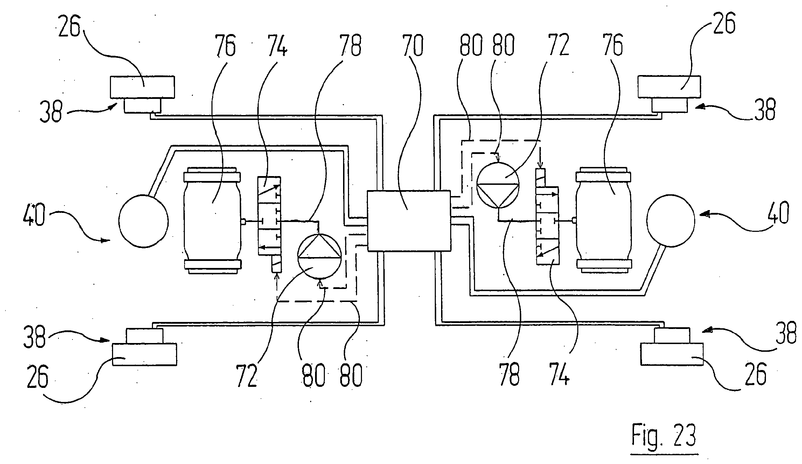

In Figur 23 ist das Steuerprinzip der Fördereinheit 20 aus Figuren 15 und 16 gezeigt. Dargestellt sind die Pumpe 72 und das Ventil 74.

Zum Erfassen des Luftdrucks im Druckkissen 76 kann ein in den Figuren nicht abgebildeter Luftdrucksensor eingesetzt werden. Aus den Luftdruckmessdaten in Kombination mit den von dem Wegsensor 84 erzeugten Messdaten lässt sich das Gewicht der zu transportierenden Last ermitteln.

Die in den Figuren 15 bis 23 gezeigten Ausführungsbeispiele umfassen pneumatisch betriebene Druckkissen. Für den Fachmann ist ohne weiteres ersichtlich, dass ein erfindungsgemäßes Druckkissen ebenfalls hydraulisch betrieben werden kann. Hierzu ist das Mitführen eines Flüssigkeitsspeichers notwendig.

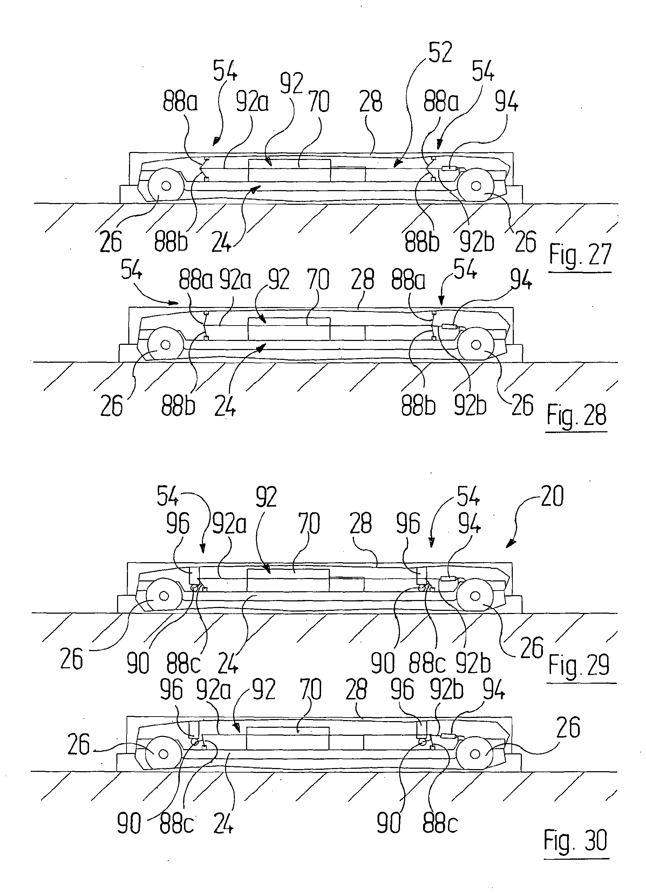

Die Figuren 27 bis 34 veranschaulichen weitere Ausführungsbeispiele der Fördereinrichtung, bei denen die Hub-/Senkeinheit Hebel oder Hebelelemente umfasst. Aus Übersichtlichkeitsgründen sind in den Figuren im Wesentlichen nur Komponenten der Hub-/Senkeinrichtungen dargestellt.

Die Figuren 27 und 28 veranschaulichen ein abgewandeltes Ausführungsbeispiel der Fördereinrichtung in der Leer- bzw. in der Förderkonfiguration. Die Hub-/Senkeinrichtung 52 umfasst zwei mit verschiedenen Bereichen des Tragelements 28 gelenkig verbundene Hebel 88a, zwei mit verschiedenen Bereichen 24a, 24b des Fahrwerks 24 verbundene Hebel 88b, eine Schubstange 92, bestehend aus zwei starr miteinander verbundenen Schubstangenbereichen 92a, 92b, sowie einen Aktuator 94, der als ein hydraulisch oder pneumatisch betriebener Zylinder ausgeführt ist.

Die Schubstangenbereiche 92a und 92b sind in nicht eigens gezeigten Führungen derart aufgenommen, dass sie einen translatorischen Freiheitsgrad in Richtung ihrer Längsachse aufweisen. Beide Schubstangenbereiche 92a, 92b haben ein aktuatornahes und ein aktuatorfernes Ende, wobei die Krafteinleitung zur Aktuierung über das aktuatornahe Ende erfolgt. An dem aktuatorfernen Ende tragen die Schubstangenbereiche 92a, 92b jeweils zwei gelenkig angebundene Hebel 88a, 88b. Die ersten Hebel 88a sind mit verschiedenen Bereichen des Tragelements 28 gelenkig verbunden, die zweiten Hebel 88b sind mit verschiedenen Bereichen des Fahrwerks 24 gelenkig verbunden. Alle Hebel sind in nicht eigens gezeigten Führungen geführt.

Bei Betätigung des Aktuators 94 wird die Schubstange 92 im Wesentlichen entlang ihrer Längsachse bewegt. Über die dem Aktuator 94 abliegenden Enden der Schubstangenbereiche 92a und 92b werden die Hebel 88a, 88b bewegt, so dass diese aus einer geneigten Stellung in eine im Wesentlichen vertikale Stellung überführt werden können. Dadurch lässt sich die absolute Höhe des Tragelements 28 über dem Boden vergrößern und die Fördereinheit aus einer Leerkonfiguration in eine Tragkonfiguration überführen.

In dieser Ausführung der Erfindung sind die Hub-/Senkeinheiten 54 miteinander gekoppelt, so dass diese nicht unabhängig voneinander betrieben werden können. Die reduzierte Komponentenanzahl kann allerdings zur Vereinfachung der Hub-/Senkeinrichtung und damit zu einer Kostenersparnis beitragen.

Die Figuren 29 und 30 veranschaulichen ein weiteres abgewandeltes Ausführungsbeispiel der Fördereinheit mit gekoppelten Hub-/Senkeinheiten 54 in der Leer- bzw. in der Förderkonfiguration. Die Hub-/Senkeinrichtung 52 umfasst zwei mit verschiedenen Bereichen des Tragelements 28 fest verbundene Stutzen 96, zwei mit verschiedenen Bereichen 24a, 24b des Fahrwerks 24 verbundene Hebelelemente 88c, die jeweils ein mit dem Stutzen 96 in Kontakt stehendes Rollelement 90 tragen, die Schubstange 92 sowie den Aktuator 94 nach dem Ausführungsbeispiel aus den Figuren 27 und 28.

Bei Betätigung des Aktuators 94 wird die Schubstange 92 im Wesentlichen entlang ihrer Längsachse bewegt. Über die dem Aktuator 94 abliegenden Enden der Schubstangenbereiche 92a und 92b werden die Hebelelemente 88c bewegt, so dass diese aus einer geneigten Stellung in eine im Wesentlichen vertikale Stellung überführt werden können. Dabei rollen die Rollelemente 90 an einer jeweiligen Kontaktfläche der Stutzen 96 ab und übertragen eine vertikal nach oben wirkende Kraft an die Stutzen 96. Dadurch lässt sich die absolute Höhe des Tragelements 28 über den Boden vergrößern und die Fördereinheit 20 aus einer Leerkonfiguration in eine Tragkonfiguration überführen.

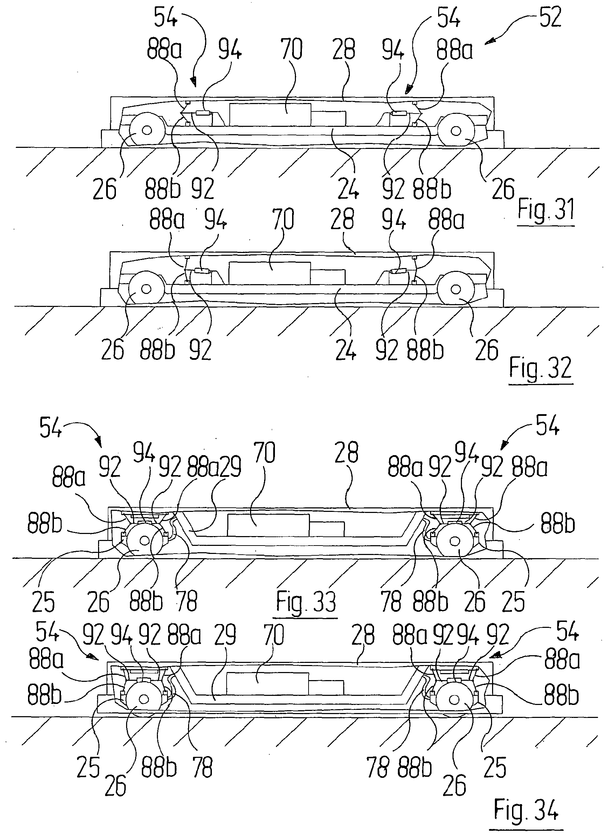

Die Figuren 31 und 32 veranschaulichen ein noch weiteres abgewandeltes Ausführungsbeispiel der Fördereinheit in der Leer- bzw. in der Förderkonfiguration, bei dem die Hub-/Senkeinheiten unabhängig voneinander angesteuert werden können. Die Hub-/Senkeinrichtung 52 umfasst zwei mit verschiedenen Bereichen des Tragelements 28 gelenkig verbundene Hebel 88a, zwei mit verschiedenen Bereichen 24a, 24b des Fahrwerks 24 verbundene Hebel 88b, zwei Schubstangen 92, die im Vergleich zu den Ausführungsbeispielen aus den Figuren 27 bis 30 kürzer sind, sowie zwei Aktuatoren 94 nach den Ausführungsbeispielen aus den Figuren 27 bis 30.

Die Schubstangen 92 sind in nicht eigens gezeigten Führungen derart aufgenommen, dass sie einen translatorischen Freiheitsgrad in Richtung ihrer Längsachse aufweisen. Beide Schubstangen 92 haben ein aktuatornahes und ein aktuatorfernes Ende, wobei die Krafteinleitung zur Aktuierung über das aktuatornahe Ende geschieht. An dem aktuatorfernen Ende tragen die Schubstangen 92 jeweils zwei gelenkig angebundene Hebel 88a, 88b. Die ersten Hebel 88a sind mit verschiedenen Bereichen des Tragelements 28 gelenkig verbunden, die zweiten Hebel 88b sind mit verschiedenen Bereichen des Fahrwerks 24 gelenkig verbunden. Alle Hebel sind in nicht eigens gezeigten Führungen geführt.

Die Fördereinheit 20 wird aus einer Leerkonfiguration in eine Tragkonfiguration analog zu dem Ausführungsbeispiel aus den Figuren 27 und 28 überführt.

Ein derartige Hub-/Senkeinrichtung 52 ermöglicht eine unabhängige Ansteuerung der Hub-/Senkeinheiten 54, so dass eine Neigung des Tragelements 28 relativ zu dem Fahrwerk 24 ausführbar ist.

Die Figuren 33 und 34 veranschaulichen ein weiteres Ausführungsbeispiel der Fördereinheit in der Leer- bzw. in der Förderkonfiguration, bei dem die Hub-/Senkeinheiten unabhängig voneinander angesteuert werden können. Die vorgesehenen Hub-/Senkeinheiten 54 weisen einen ähnlichen Aufbau auf wie der in den bereits beschriebenen Ausführungsbeispielen aus den Figuren 31 und 32. An dem Aktuator 94 sind zwei in Längsrichtung entgegengesetzt angeordnete Schubstangen 92 angebunden, so dass dieser in zwei Wirkrichtungen arbeiten kann. Die Schubstangen 92 betätigen ihrerseits jeweils zwei Hebel 88a, 88b, die an dem Tragelement 28 bzw. an das Fahrwerk 24 angreifen. Hierbei ist das Fahrwerk 24 als ein Antriebsrahmen 25 ausgeführt.

Des Weiteren ist in dem Ausführungsbeispiel das Tragelement 28 mit einem Oberrahmen 29 ausgestattet, der dazu eingerichtet ist, alle mitgeführten Steuerungs- und Versorgungskomponenten aufzunehmen. Dazu gehören beispielsweise die Steuerung 70, eine nicht eigens gezeigte Stromversorgung in der Form von Batterien oder Akkumulatoren oder für den Fall, dass Hydraulik- oder Pneumatikaktuatoren eingesetzt werden, Speicher, Pumpen und Ventile sowie die notwendigen Strom- und Fluidleitungen.

Die Figur 25 zeigt eine artverwandte Fördereinheit, die den beschriebenen Oberrahmen aufweist und deren Hub-/Senkeinheiten 54 Teleskopzylinder 67 umfassen.

Durch die Unterbringung der mitgeführten Komponenten in dem Oberrahmen 29 des Tragelements 28 wird eine größere Bodenfreiheit der Fördereinheit 20 gewährleistet. Dies hat den Vorteil, dass durch ein Anheben des Tragelements 28 während der Fahrt Hindernisse noch größerer Höhe überwunden werden können oder Steigungs- und Gefällefahrten mit noch größerer Steigung möglich werden.

Die in den Figuren gezeigten Ausführungsbeispiele umfassen Fördereinheiten in einer Vierrad-Ausführung. Für den Fachmann ist ohne weiteres ersichtlich, dass eine erfindungsgemäße Fördereinheit auch als ein Dreirad aufgebaut sein kann. Die Einzel-Bodenrolle kann hierbei eine alleinige Stützfunktion haben oder ebenfalls eigenständig angetrieben sein.

Ferner können nicht eigens gezeigte Stütz-Bodenrollen vorgesehen sein, so dass eine Fahrt in Richtung quer zur Längsachse der Fördereinheit ermöglicht wird. Hierzu müssen die Stütz-Bodenrollen derart angeordnet sein, dass deren Stützpunkte außerhalb der Ebene sind, welche die Drehachsen der Lenkeinheiten bei einer Querfahrt beinhaltet. Um die Überfahrt von Hindernissen nicht zu erschweren, kann es von Vorteil sein, wenn die Stütz-Bodenrolle nur bei Bedarf ausgefahren wird.

Die bereits beschriebenen Ausführungsbeispiele umfassen Fördereinheiten, die Fluidtechnik ausschließlich für das Heben und Senken des Tragelements verwenden. Denkbar sind allerdings auch Ausführungen, bei denen auch Fahr- und/oder Lenkantriebe mittels Hydraulik- oder Pneumatikelemente realisiert sind.

## Patentansprüche

1. Fördersystem zum Fördern von beladenen oder unbeladenen Ladungsträgern (12) mit mehreren Fördereinrichtungen (18), die jeweils wenigstens zwei zusammenarbeitende und koordiniert nebeneinander herfahrende Fördereinheiten (20) umfassen, wobei jede Fördereinheit (20) aufweist:
a) ein Fahrwerk (24), welches auf Bodenrollen (26) verfahrbar ist;
b) ein von dem Fahrwerk (24) mitgeführtes Tragelement (28), welches bezogen auf das Fahrwerk (24) anhebbar oder absenkbar ist, derart, dass die Fördereinheit in einer Leerkonfiguration einen Ladungsträger (12) vollständig unterfahren und in einer Förderkonfiguration einen Ladungsträger(12) mit dem Tragelement (28) aufnehmen und fördern kann;
c) ein Antriebssystem (30), mittels welchem wenigstens eine der Bodenrollen (26) und das Tragelement (28) antreibbar sind, wobei das Antriebssystem (30) einen Fahrantrieb (32) für das Fahrwerk (24) und eine Hub-/Senkeinrichtung (52) für das Tragelement (28) umfasst;
**gekennzeichnet durch**
d) eine Steuerung (70), die dazu eingerichtet ist, das Antriebssystem (30) derart zu steuern, dass das Tragelement (28) eine Bewegung durchführt, die durch eine Überlagerung einer horizontalen Bewegungskomponente des Fahrwerks (24) und einer vertikalen Bewegungskomponente des Tragelements (28) bewirkt wird.

2. Fördersystem nach Anspruch 1, **dadurch gekennzeichnet, dass** die Hub-/Senkeinrichtung (52) wenigstens zwei Hub-/ Senkeinheiten (54) umfasst, wobei
a) die beiden Hub-/Senkeinheiten (54) mit verschiedenen Bereichen (28a, 28b) des Tragelements (28) gekoppelt sind;
oder
b) das Tragelement (28) ein erstes Trageelement ist und ein zweites Tragelement vorhanden ist und jedes Tragelement mit jeweils einer Hub-/Senkeinheit (54) gekoppelt ist.

3. Fördersystem nach Anspruch 2, **dadurch gekennzeichnet, dass** die erste Hub-/Senkeinheit (54) unabhängig von der zweiten Hub-/Senkeinheit (54) betreibbar ist.

4. Fördersystem nach einem der Ansprüche 1 bis 3, **dadurch gekennzeichnet, dass** eine Hub-/Senkeinheit (54) der Hub-/Senkeinrichtung (52)
a) eine Rampe (56) umfasst, die das eine Tragelement (28) oder das erste Tragelement und/oder das zweite Tragelement auf seiner dem Fahrwerk (24) zugewandten Seite trägt;
b) einen am Fahrwerk (24) geführten beweglichen Schlitten (58) umfasst, der an der jeweiligen Rampe (56) angreift und mittels eines Schlittenantriebs (60) antreibbar ist.

5. Fördersystem nach Anspruch 4, **dadurch gekennzeichnet, dass** der Schlitten (58) eine Rolle (64) lagert, mit welcher der Schlitten (58) an der Rampe (56) abläuft.

6. Fördersystem nach einem der Ansprüche 1 bis 3, **dadurch gekennzeichnet, dass** eine Hub-/Senkeinheit (54) der Hub-/Senkeinrichtung (52) wenigstens einen Arbeitszylinder (66) mit einem beweglichen Zylinderelement (68) umfasst, welches an der dem Fahrwerk (24) zugewandten Seite des Tragelements (28) angreift.

7. Fördersystem nach Anspruch 6, **dadurch gekennzeichnet, dass** der Arbeitszylinder ein Teleskopzylinder (67) ist.

8. Fördersystem nach einem der Ansprüche 1 bis 3, **dadurch gekennzeichnet, dass** die Hub-/Senkeinrichtung (52) wenigstens eine Hub-/Senkeinheit (54) umfasst, die ein Druckkissen (76) umfasst, das sich bei einer Innendruckerhöhung ausdehnt und an der dem Fahrwerk (24) zugewandten Seite des Tragelements (28) angreift.

9. Fördersystem nach Anspruch 8, **dadurch gekennzeichnet, dass** eine vorhandene Hub-/Senkeinheit (54) der Hub-/Senkeinrichtung (52) mit einer anderen Hub-/Senkeinheit (54) in Parallelschaltung oder in serieller Schaltung betreibbar ist.

10. Fördersystem nach einem der Ansprüche 1 bis 3, **dadurch gekennzeichnet, dass** eine Hub-/Senkeinheit (54) der Hub-/Senkeinrichtung (52)
a. einen ersten Hebel (88a) umfasst, der an dem einen Tragelement (28) oder an dem ersten Tragelement und/oder an dem zweiten Tragelement auf seiner dem Fahrwerk (24) zugewandten Seite angebunden ist;
b. einen zweiten Hebel (88b) umfasst, der an dem Fahrwerk (24) auf seiner dem Tragelement (28) zugewandten Seite angebunden ist;
c. eine Schubstange (92; 92a, 92b) umfasst, die an einem Ende den ersten und den zweiten Hebel (88a, 88b) miteinander gelenkig verbindet und an einem abgewandten Ende durch einen Aktuator antreibbar ist.

11. Fördersystem nach einem der Ansprüche 1 bis 2, **dadurch gekennzeichnet, dass** eine Hub-/Senkeinheit (54) der Hub-/Senkeinrichtung (52)
a. einen Stutzen (96) umfasst, den das eine Tragelement (28) oder das erste Tragelement und/oder das zweite Tragelement auf seiner dem Fahrwerk (24) zugewandten Seite trägt;
b. ein Hebelelement (88c) umfasst, das an dem Fahrwerk (24) auf seiner dem Tragelement (28) zugewandten Seite angebunden ist;
c. ein Rollelement (90) umfasst, das an dem Hebelelement (88c) angebunden ist und an dem Stutzen abrollt;
d. eine Schubstange (92; 92a, 92b) umfasst, die an einem Ende gelenkig mit dem Hebelelement (88c) verbunden ist und an einem abgewandten Ende durch einen Aktuator antreibbar ist.

12. Fördersystem nach einem der Ansprüche 1 bis 7, **dadurch gekennzeichnet, dass** das Fahrwerk einen die Hub-/Senkeinheiten aufnehmenden Antriebsrahmen (25) umfasst und dass das Tragelement (28) einen Oberrahmen (29) umfasst, der Steuerung, Versorgungseinheit und Leitungen trägt.

13. Fördersystem nach einem der Ansprüche 1 bis 12, **dadurch gekennzeichnet, dass** die Hub-/Senkeinheit (54) mit Wegsensoren (84) ausgestattet ist, welche die zurückgelegte Strecke des Tragelements (28) bezüglich des Fahrwerks (24) erfassen.

14. Fördersystem nach einem der Ansprüche 1 bis 9, **gekennzeichnet durch** eine Druckmesseinrichtung (86), die dazu eingerichtet ist, das Gewicht einer zu transportierenden Last zu messen.

15. Fördersystem nach Anspruch 14, **dadurch gekennzeichnet, dass** das Antriebssystem (30) in Abhängigkeit von dem gemessenen Gewichts steuerbar ist.

16. Verfahren zum Fördern von beladenen oder unbeladenen Ladungsträgern (12) mit den folgenden Schritten:
a) Bereitstellen eines Fördersystems mit mehreren Fördereinrichtungen (18), die jeweils wenigstens zwei zusammenarbeitende und koordiniert nebeneinander herfahrende Fördereinheiten (20) umfassen, wobei jede Fördereinheit aufweist:
- ein Fahrwerk (24), welches auf Bodenrollen (26) verfahrbar ist;
- ein von dem Fahrwerk (24) mitgeführtes Tragelement (28), welches bezogen auf das Fahrwerk (24) anhebbar oder absenkbar ist, derart, dass die Fördereinheit in einer Leerkonfiguration einen Ladungsträger (12) vollständig unterfahren und in einer Förderkonfiguration einen Ladungsträger(12) mit dem Tragelement (28) aufnehmen und fördern kann;
- ein Antriebssystem (30), mittels welchem wenigstens eine der Bodenrollen (26) und das Tragelement (28) antreibbar sind, wobei das Antriebssystem (30) einen Fahrantrieb (32) für das Fahrwerk (24) und eine Hub-/Senkeinrichtung (52) für das Tragelement (28) umfasst;
**gekennzeichnet durch** folgenden weiteren Schritt:
b) Steuern des Antriebssystems (30) der Fördereinheit derart, dass das Tragelement (28) eine Bewegung durchführt, die durch eine Überlagerung einer horizontalen Bewegungskomponente des Fahrwerks (24) und einer vertikalen Bewegungskomponente des Tragelements (28) bewirkt wird.

## Claims

1. Conveyor system for conveying loaded or unloaded load carriers (12) including a plurality of conveyor devices (18) each having at least two conveyor units (20), which cooperate with each other and travel in a coordinated side-by-side manner, each conveyor unit (20) having:
a) a chassis (24) which is maneuverable on floor rollers (26);
b) a support element (28) carried along by the chassis (24), wherein the support element (28) can be raised or lowered relative to the chassis (24) such that the conveyor unit can travel completely under a load carrier (12) in an empty configuration and can receive and convey a load carrier (12) with the support element (28) in a conveying configuration;
c) a drive system (30) by means of which at least one of the floor rollers (26) and the support element (28) can be driven, the drive system (30) comprising a travel drive (32) for the chassis (24) and a lifting/lowering device (52) for the support element (28);
**characterized by**
d) a controller (70) configured to control the drive system (30) such that the support element (28) performs a movement effected by a superposition of a horizontal movement component of the chassis (24) and a vertical movement component of the support element (28).

2. Conveyor system according to claim 1, **characterized in that** the lifting/lowering device (52) comprises at least two lifting/lowering units (54), wherein
a) the two lifting/lowering units (54) are coupled to different sections (28a, 28b) of the support element (28);
or
b) the support element (28) is a first support element and a second support element is provided and each support element is coupled to a respective lifting/lowering unit (54).

3. Conveyor system according to claim 2, **characterized in that** the first lifting/lowering unit (54) is operable independently from the second lifting/lowering unit (54).

4. Conveyor system according to any one of claims 1 to 3, **characterized in that** a lifting/lowering unit (54) of the lifting/lowering device (52) comprises
a) a ramp (56) supporting the one support element (28) or the first support element and/or the second support element on its side facing the chassis (24);
b) a movable carriage (58), which is guided on the chassis (24) and engages the respective ramp (56) and can be driven by means of a carriage drive (60).

5. Conveyor system according to claim 4, **characterized in that** the carriage (58) supports a roller (64) with which the carriage (58) runs along the ramp (56).

6. Conveyor system according to any one of claims 1 to 3, **characterized in that** a lifting/lowering unit (54) of the lifting/lowering device (52) comprises at least one working cylinder (66) with a movable cylinder element (68), which engages on the side of the support element (28) facing the chassis (24).

7. Conveyor system according to claim 6, **characterized in that** the working cylinder is a telescopic cylinder (67).

8. Conveyor system according to any one of claims 1 to 3, **characterized in that** the lifting/lowering device (52) comprises at least one lifting/lowering unit (54) which comprises a pressure pad (76) which expands in the event of an internal pressure increase and engages on the side of the support element (28) facing the chassis (24).

9. Conveyor system according to claim 8, **characterized in that** an existing lifting/lowering unit (54) of the lifting/lowering device (52) is operable with another lifting/lowering unit (54) in parallel connection or in serial connection.

10. Conveyor system according to any one of claims 1 to 3, **characterized in that** a lifting/lowering unit (54) of the lifting/lowering device (52) comprises
a. a first lever (88a) attached to the one support member (28) or to the first support member and/or to the second support member on its side facing the chassis (24);
b. a second lever (88b) attached to the chassis (24) on its side facing the support element (28);
c. a push rod (92; 92a, 92b) which hingedly connects the first and second levers (88a, 88b) at one end and is drivable by an actuator at an opposite end.

11. Conveyor system according to any one of claims 1 to 2, **characterized in that** a lifting/lowering unit (54) of the lifting/lowering device (52) comprises
a. a fitting (96) which the one support element (28) or the first support element and/or the second support element carries on its side facing the chassis (24);
b. a lever element (88c) attached to the chassis (24) on its side facing the support element (28);
c. a rolling element (90) which is attached to the lever element (88c) and rolls along on the fitting;
d. a push rod (92; 92a, 92b) which is hingedly connected to the lever element (88c) at one end and is drivable by an actuator at an opposite end.

12. Conveyor system according to any one of claims 1 to 7, **characterized in that** the chassis comprises a drive frame (25) which receives the lifting/lowering units, and **in that** the support element (28) comprises a top frame (29) supporting the control system, supply unit and lines.

13. Conveyor system according to any one of claims 1 to 12, **characterized in that** the lifting/lowering unit (54) is equipped with path sensors (84) which detect the distance traveled by the support element (28) with respect to the chassis (24).

14. Conveyor system according to any one of claims 1 to 9, **characterized by** a pressure measuring device (86) configured to measure the weight of a load to be transported.

15. Conveyor system according to claim 14, **characterized in that** the drive system (30) is controllable in dependence on the measured weight.

16. Method for conveying loaded or unloaded load carriers (12) comprising the following steps:
a) providing a conveyor system including a plurality of conveyor devices (18) each having at least two conveyor units (20), which cooperate with each other and travel in a coordinated side-by-side manner, each conveyor unit having:
- a chassis (24) which is maneuverable on floor rollers (26);
- a support element (28) carried along by the chassis (24), wherein the support element (28) can be raised or lowered relative to the chassis (24) such that the conveyor unit can travel completely under a load carrier (12) in an empty configuration and can receive and convey a load carrier (12) with the support element (28) in a conveying configuration;
- a drive system (30) by means of which at least one of the floor rollers (26) and the support element (28) can be driven, the drive system (30) comprising a travel drive (32) for the chassis (24) and a lifting/lowering device (52) for the support element (28);
**characterized by** the following further step:
b) controlling the drive system (30) of the conveyor unit such that the support element (28) performs a movement effected by a superposition of a horizontal movement component of the chassis (24) and a vertical movement component of the support element (28).

## Revendications

1. Système de transport permettant de transporter des supports de charge (12) chargés ou non chargés, comportant plusieurs dispositifs de transport (18) qui comportent respectivement au moins deux unités de transport (20) coopérant et se déplaçant les unes à côté des autres de manière coordonnée, dans lequel chaque unité de transport (20) comprend :
a) un train roulant (24), lequel est déplaçable sur des rouleaux de sol (26) ;
b) un élément porteur (28) guidé par le train roulant (24), lequel élément peut être soulevé ou abaissé par rapport au train roulant (24), de telle sorte que l'unité de transport puisse se déplacer entièrement en dessous d'un support de charge (12) dans une configuration vide et puisse recevoir et transporter un support de charge (12) avec l'élément porteur (28) dans une configuration de transport ;
c) un système d'entraînement (30) au moyen duquel au moins l'un des rouleaux de sol (26) et l'élément porteur (28) peuvent être entraînés, dans lequel le système d'entraînement (30) comporte un entraînement de déplacement (32) pour le train roulant (24) et un dispositif de levage/d'abaissement (52) pour l'élément porteur (28) ;
**caractérisé par**
d) une commande (70) qui est conçue pour commander le système d'entraînement (30) de telle sorte que l'élément porteur (28) effectue un mouvement qui est produit par une superposition d'une composante de mouvement horizontale du train roulant (24) et d'une composante de mouvement verticale de l'élément porteur (28) .

2. Système de transport selon la revendication 1, **caractérisé en ce que** le dispositif de levage/d'abaissement (52) comporte au moins deux unités de levage/d'abaissement (54),
a) les deux unités de levage/d'abaissement (54) étant accouplées à différentes régions (28a, 28b) de l'élément porteur (28) ;
ou
b) l'élément porteur (28) étant un premier élément porteur et un deuxième élément porteur étant prévu et chaque élément porteur étant accouplé à une unité de levage/d'abaissement (54) respectivement.

3. Système de transport selon la revendication 2, **caractérisé en ce que** la première unité de levage/d'abaissement (54) peut fonctionner indépendamment de la deuxième unité de levage/d'abaissement (54).

4. Système de transport selon l'une des revendications 1 à 3, **caractérisé en ce qu'**une unité de levage/d'abaissement (54) du dispositif de levage/d'abaissement (52)
a) comporte une rampe (56) qui supporte, sur son côté tourné vers le train roulant (24), l'un des éléments porteurs (28) ou le premier élément porteur et/ou le deuxième élément porteur ;
b) comporte un chariot (58) mobile guidé sur le train roulant (24), lequel chariot s'applique sur la rampe respective (56) et peut être entraîné au moyen d'un entraînement de chariot (60).

5. Système de transport selon la revendication 4, **caractérisé en ce que** le chariot (58) supporte un rouleau (64), à l'aide duquel le chariot (58) roule sur la rampe (56).

6. Système de transport selon l'une des revendications 1 à 3, **caractérisé en ce qu'**une unité de levage/d'abaissement (54) du dispositif de levage/d'abaissement (52) comporte au moins un cylindre de travail (66) doté d'un élément cylindrique mobile (68), lequel s'applique sur le côté de l'élément porteur (28) tourné vers le train roulant (24).

7. Système de transport selon la revendication 6, **caractérisé en ce que** le cylindre de travail est un cylindre télescopique (67).

8. Système de transport selon l'une des revendications 1 à 3, **caractérisé en ce que** le dispositif de levage/d'abaissement (52) comporte au moins une unité de levage/d'abaissement (54) qui comporte un coussin de pression (76) qui se dilate en cas d'augmentation de la pression interne et s'applique contre le côté de l'élément porteur (28) tourné vers le train roulant (24).

9. Système de transport selon la revendication 8, **caractérisé en ce qu'**une unité de levage/d'abaissement présente (54) du dispositif de levage/d'abaissement (52) peut fonctionner en montage en parallèle ou en montage en série avec une autre unité de levage/d'abaissement (54) .

10. Système de transport selon l'une des revendications 1 à 3, **caractérisé en ce qu'**une unité de levage/d'abaissement (54) du dispositif de levage/d'abaissement (52)
a. comporte un premier levier (88a) qui est lié à l'un des éléments porteurs (28) ou au premier élément porteur et/ou au deuxième élément porteur sur son côté tourné vers le train roulant (24) ;
b. comporte un deuxième levier (88b) qui est lié au train roulant (24) sur son côté tourné vers l'élément porteur (28) ;
c. une tige de poussée (92 ; 92a, 92b) qui, à une extrémité, relie le premier et le deuxième levier (88a, 88b) l'un à l'autre de manière articulée et, à une extrémité opposée, peut être entraînée par un actionneur.

11. Système de transport selon l'une des revendications 1 et 2, **caractérisé en ce qu'**une unité de levage/d'abaissement (54) du dispositif de levage/d'abaissement (52)
a. comporte un support (96) que l'un des éléments porteurs (28) ou le premier élément porteur et/ou le deuxième élément porteur supporte(nt) sur son côté tourné vers le train roulant (24) ;
b. comporte un élément levier (88c) qui est lié au train roulant (24) sur son côté tourné vers l'élément porteur (28) ;
c. un élément de roulement (90) qui est lié à l'élément levier (88c) et roule sur le support ;
d. une tige de poussée (92 ; 92a, 92b) qui, à une extrémité, est reliée de manière articulée à l'élément levier (88c) et, à une extrémité opposée, peut être entraînée par un actionneur.

12. Système de transport selon l'une des revendications 1 à 7, **caractérisé en ce que** le train roulant comporte un cadre d'entraînement (25) recevant les unités de levage/d'abaissement et **en ce que** l'élément porteur (28) comporte un cadre supérieur (29) qui supporte la commande, l'unité d'alimentation et des conduites.

13. Système de transport selon l'une des revendications 1 à 12, **caractérisé en ce que** l'unité de levage/d'abaissement (54) est équipée de capteurs de déplacement (84), lesquels détectent la distance parcourue par l'élément porteur (28) par rapport au train roulant (24).

14. Système de transport selon l'une des revendications 1 à 9, **caractérisé par** un dispositif de mesure de pression (86) qui est conçu pour mesurer la masse d'une charge à transporter.

15. Système de transport selon la revendication 14, **caractérisé en ce que** le système d'entraînement (30) peut être commandé en fonction de la masse mesurée.

16. Procédé permettant de transporter des supports de charge (12) chargés ou non chargés, comportant les étapes suivantes :
a) fourniture d'un système de transport comportant plusieurs dispositifs de transport (18) qui comportent respectivement au moins deux unités de transport (20) coopérant et se déplaçant les unes à côté des autres de manière coordonnée, dans lequel chaque unité de transport comprend :
- un train roulant (24), lequel est déplaçable sur des rouleaux de sol (26) ;
- un élément porteur (28) guidé par le train roulant (24), lequel élément peut être soulevé ou abaissé par rapport au train roulant (24), de telle sorte que l'unité de transport puisse se déplacer entièrement en dessous d'un support de charge (12) dans une configuration vide et puisse recevoir et transporter un support de charge (12) avec l'élément porteur (28) dans une configuration de transport ;
- un système d'entraînement (30) au moyen duquel au moins l'un des rouleaux de sol (26) et l'élément porteur (28) peuvent être entraînés, dans lequel le système d'entraînement (30) comporte un entraînement de déplacement (32) pour le train roulant (24) et un dispositif de levage/d'abaissement (52) pour l'élément porteur (28) ;
**caractérisé par** l'étape supplémentaire suivante :
b) commande du système d'entraînement (30) de l'unité de transport de telle sorte que l'élément porteur (28) effectue un mouvement qui est produit par une superposition d'une composante de mouvement horizontale du train roulant (24) et d'une composante de mouvement verticale de l'élément porteur (28).
